(19) Europäisches Patentamt / European Patent Office / Office européen des brevets

(11) **EP 4 756 893 A1**

(12) **EUROPEAN PATENT APPLICATION**
published in accordance with Art. 153(4) EPC

(43) Date of publication:
**10.06.2026 Bulletin 2026/24**

(21) Application number: **24849494.0**

(22) Date of filing: **26.07.2024**

(51) International Patent Classification (IPC):
*H01M 4/13* (2010.01)  *H01M 4/66* (2006.01)
*H01M 4/62* (2006.01)  *H01M 10/0585* (2010.01)
*H01M 10/052* (2010.01)  *H01M 4/139* (2010.01)
*H01M 10/056* (2010.01)  *H01M 4/02* (2006.01)

(52) Cooperative Patent Classification (CPC):
**H01M 4/02; H01M 4/13; H01M 4/139; H01M 4/62;
H01M 4/66; H01M 10/052; H01M 10/056;
H01M 10/0562; H01M 10/0585;** Y02E 60/10

(86) International application number:
**PCT/KR2024/010880**

(87) International publication number:
**WO 2025/028925 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023 JP 2023123271**

(71) Applicant: **SAMSUNG SDI CO., LTD.
Yongin-si, Gyeonggi-do 17084 (KR)**

(72) Inventor: **WAKAI, Eiichi
Yokohama-shi, Kanagawa 230--0027 (JP)**

(74) Representative: **Gulde & Partner
Patent- und Rechtsanwaltskanzlei mbB
Berliner Freiheit 2
10785 Berlin (DE)**

(54) **NEGATIVE ELECTRODE FOR ALL-SOLID-STATE RECHARGEABLE BATTERY, AND ALL-SOLID-STATE RECHARGEABLE BATTERY INCLUDING SAME**

(57)    The present invention provides a negative electrode for an all-solid-state rechargeable battery that is unlikely to cause a short circuit even when rapidly charged and can maintain a high battery capacity even when repeating charge and discharge cycles.

The negative electrode for an all-solid-state rechargeable battery includes
a negative electrode current collector and a negative electrode mixture layer,
wherein the negative electrode mixture layer comprises a first layer forming a surface on the negative electrode collector side of the negative electrode mixture layer and a second layer forming a surface on the opposite side to the first layer of the negative electrode mixture layer,
the first layer and the second layer each comprise a negative electrode active material, a carbon material, and a binder,
an amount A of the binder in the first layer is greater than or equal to 5 parts by weight and less than or equal to 20 parts by weight based on 100 parts by weight of a total weight of the negative electrode active material and the carbon material in the first layer,
an amount B of the binder in the second layer is greater than or equal to 1 part by weight and less than or equal to 10 parts by weight based on 100 parts by weight of the total weight of the negative electrode active material and the carbon material in the second layer,
the amount A is greater than the amount B, and
a difference between the amount A and the amount B is in a range of greater than or equal to 4 parts by weight and less than or equal to 19 parts by weight.

FIG. 4

## Description

**[Technical Field]**

This disclosure relates to a negative electrode for an all-solid-state rechargeable battery and an all-solid-state rechargeable battery including the same.

**[Background Art]**

All-solid-state rechargeable batteries are expected to significantly improve energy density compared to conventional rechargeable batteries using electrolytes. In addition, the demand for EV applications has increased rapidly recently, making it an urgent task to improve rapid charging performance and reduce cycle degradation.

As one of the factors affecting the battery performance of the all-solid-state rechargeable battery as described above, a peel strength between a negative electrode current collector and a negative electrode mixture layer constituting the electrode of the all-solid-state rechargeable battery may be described as an example.

If the peel strength between the negative electrode current collector and the negative electrode mixture layer is too low, there is a risk that the negative electrode mixture layer will peel off from the negative electrode collector or the position of the negative electrode mixture layer will be misaligned during the assembly process of the all-solid-state rechargeable battery. As a result, there is a risk that it may not be able to function as a negative electrode or that a short circuit may occur.

Accordingly, as shown in Patent Documents 1 to 3, an all-solid-state lithium rechargeable battery is being considered in which the peel strength between the negative electrode current collector and the negative electrode mixture layer is increased by making an amount of the binder included in the negative electrode mixture layer relatively larger than that of other parts in order to increase the peel strength between the negative electrode current collector and the negative electrode mixture layer.

[Prior Art Documents]

[Patent Document]

Patent Document 1: Korean Patent No. 2071585
Patent Document 2: Korean Patent No. 2053063
Patent Document 3: Korean Patent No. 1527748

**[Disclosure]**

However, as a result of repeated examinations by the inventors of the present invention, it has been found that if the peel strength between the negative electrode current collector and the negative electrode mixture layer is excessively large, not only will the battery capacity decrease, but cracks may also occur in the negative electrode mixture layer when lithium is precipitated during charging. If a crack occurs in the negative electrode mixture layer, for example, there is a risk that lithium precipitated from the negative electrode will concentrate at the location of the crack, causing a short circuit.

The inventors of the present invention also considered that not only the peel strength between the negative electrode current collector and the negative electrode mixture layer, but also the peel strength between the negative electrode mixture layer and the solid electrolyte layer are factors affecting the performance of the all-solid-state battery. The performance of the all-solid-state battery in this specification is battery capacity and suppression of short circuit during charging.

The present invention has been made in consideration of the aforementioned problems, and aims to provide a negative electrode for an all-solid-state rechargeable battery that is unlikely to cause a short circuit during rapid charging and can suppress cycle degradation.

A negative electrode for an all-solid-state rechargeable battery according to an embodiment and an all-solid-state rechargeable battery including the same are as follows.

According to an embodiment, a negative electrode for an all-solid-state rechargeable battery includes a negative electrode current collector and a negative electrode mixture layer,

wherein the negative electrode mixture layer includes a first layer forming a surface on the negative electrode collector side of the negative electrode mixture layer and a second layer forming a surface on the opposite side to the first layer,

the first layer and the second layer each include a negative electrode active material, a carbon material, and a binder, an amount A of the binder in the first layer is greater than or equal to 5 parts by weight and less than or equal to 20 parts by weight based on 100 parts by weight of a total weight of the negative electrode active material and the carbon material in the first layer,

an amount B of the binder in the second layer is greater than or equal to 1 part by weight and less than or equal to 10 parts by weight based on 100 parts by weight of the total weight of the negative electrode active material and the carbon material in the second layer,

the amount A is greater than the amount B, and

a difference between the amount A and the amount B is in a range of greater than or equal to 4 parts by weight and less than or equal to 19 parts by weight.

The negative electrode mixture layer may be composed of two layers of the first layer and the back layer.

The negative electrode collector may be made of metal, and the binder may be a polyvinylidene fluoride polymer.

A peel strength between the negative electrode current collector and the negative electrode mixture layer may be greater than or equal to 35 mN/mm and less than or equal to 490 mN/mm.

According to another embodiment, an all-solid-state rechargeable battery includes a positive electrode, a negative electrode, and a solid electrolyte layer between the positive electrode and the negative electrode, wherein the negative electrode is the aforementioned negative electrode for the all-solid-state rechargeable battery.

According to another embodiment, a method for manufacturing a negative electrode for an all-solid-state rechargeable battery including a negative electrode current collector and a negative electrode mixture layer,

wherein the negative electrode mixture layer includes a first layer forming a surface on the negative electrode collector side of the negative electrode mixture layer and a second layer forming a surface on the opposite side to the first layer,

wherein the method includes

coating the first negative electrode slurry on the negative electrode current collector and drying it to form the first layer, and

coating a second negative electrode slurry on the formed first layer and drying it to form the second layer,

wherein the first negative electrode slurry and the second negative electrode slurry include a negative electrode active material, a carbon material, a binder, and a solvent,

an amount C of the binder in the first negative electrode slurry is greater than or equal to 5 parts by weight and less than or equal to 20 parts by weight based on 100 parts by weight of the total weight of the negative electrode active material and the carbon material in the first negative electrode slurry,

an amount D of the binder in the second negative electrode slurry is greater than or equal to 1 part by weight and less than or equal to 10 parts by weight based on 100 parts by weight of the total weight of the negative electrode active material and the carbon material in the second negative electrode slurry,

the amount C is greater than the amount D, and

a difference between the amount C and the amount D is in a range of greater than or equal to 4 parts by weight and less than or equal to 19 parts by weight.

And, here, the phrases "first, second" are added for convenience to distinguish each component, and "first and second" have no special meaning in terms of order or anything else.

An all-solid-state rechargeable battery including the negative electrode for the all-solid-state rechargeable battery is unlikely to cause a short circuit even when rapidly charged, and can maintain a high battery capacity even when repeating charge and discharge cycles.

[Description of the Drawings]

FIG. 1 is a cross-sectional schematic view showing the structure of an all-solid-state rechargeable battery according to an embodiment.

FIG. 2 is a cross-sectional schematic view showing the structure of an all-solid-state rechargeable battery according to another embodiment.

FIG. 3 is a cross-sectional schematic view showing the structure of an all-solid-state rechargeable battery according to another embodiment.

FIG. 4 is a cross-sectional schematic view showing the structure of an all-solid-state rechargeable battery according to an embodiment.

**[Best Mode]**

Hereinafter, specific embodiments are described in detail with reference to the attached drawings so that those with ordinary knowledge in this technical field can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In the present specification, a particle diameter may mean an average particle diameter, and the average particle diameter may be measured by a method widely known to those skilled in the art, for example, by measuring with a particle size analyzer, or by measuring with a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter may mean a diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Hereinafter, a specific configuration of an all-solid-state rechargeable battery according to an embodiment of the present invention is described.

<1. Basic configuration of all-solid-state rechargeable battery according to the present embodiment >

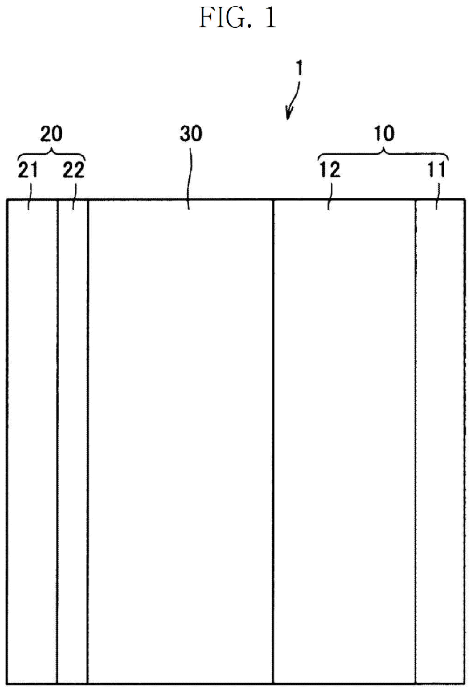

The all-solid-state rechargeable battery according to the present embodiment is an all-solid-state rechargeable battery 1 including a positive electrode 10, a negative electrode 20, and a solid electrolyte layer 30, as shown in FIG. 1.

(1-1. Positive Electrode)

The positive electrode 10 includes a positive electrode current collector 11 and a positive electrode mixture layer 12. The positive electrode current collector 11 may include, for example, a plate-shaped body or thin body made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector 11 may be omitted.

The positive electrode mixture layer 12 includes a positive electrode active material and a solid electrolyte. Meanwhile, the solid electrolyte included in the positive electrode 10 may be any solid electrolyte capable of conducting lithium ions, and may be the same type of solid electrolyte as described in the section on the solid electrolyte layer 30, or may be a different type of solid electrolyte.

The positive electrode active material may be any positive electrode active material capable of reversibly absorbing and releasing lithium ions.

For example, the positive electrode active material may be formed using a lithium salt such as lithium cobalt oxide (hereinafter referred to as LCO), lithium nickel oxide, lithium nickel cobalt oxide, lithium nickel cobalt aluminum oxide (hereinafter referred to as NCA), lithium nickel cobalt manganese oxide (hereinafter referred to as NCM), lithium manganate, lithium iron phosphate, nickel sulfide, copper sulfide, lithium sulfide, sulfur, iron oxide, or vanadium oxide. These positive electrode active materials may be used alone, or two or more may be used in combination.

In addition, it is desirable that the positive electrode active material be formed by including a lithium salt of a transition metal oxide having a layered rock salt structure among the lithium salts described above. Here, the "layered rock salt structure" refers to a structure in which oxygen and metal atomic layers are arranged alternately and regularly in the (111) direction of the cubic rock salt structure, and as a result, each atomic layer forms a two-dimensional plane. In addition, the "cubic rock salt structure" refers to a sodium chloride structure, which is a type of crystal structure, and specifically, refers to a structure in which the face-centered cubic lattices formed by each of the cations and anions are arranged with a displacement of half of the corners of the unit cell.

As lithium salts of transition metal oxides having such a layered rock salt structure, examples thereof include lithium salts of ternary transition metal oxides such as $LiNi_xCo_yAl_zO_2$ (NCA) or $LiNi_xCo_yMn_zO_2$ (NCM) (where $0<x<1$, $0<y<1$, $0<z<1$, and $x + y + z=1$).

If the positive electrode active material includes a lithium salt of a ternary transition metal oxide having the aforementioned layered rock salt structure, the energy density and thermal stability of the all-solid-state rechargeable battery 1 may be improved.

The positive electrode active material may be covered by a coating layer. Here, the coating layer of the present embodiment may be any known coating layer of a positive electrode active material of an all-solid-state rechargeable battery. Examples of the coating layer may include, for example $Li_2O-ZrO_2$.

In addition, if the positive electrode active material is formed by a lithium salt of a ternary transition metal oxide such as NCA or NCM and includes nickel (Ni) as the positive electrode active material, the capacity density of the all-solid-state rechargeable battery 1 may be increased and metal elution from the positive electrode active material in a charged state may be reduced. Accordingly, the all-solid-state rechargeable battery 1 according to the present embodiment may improve long-term reliability and cycle characteristics in a charged state.

Here, the shape of the positive electrode active material includes particle shapes such as spherical or elliptical. In addition, the particle size of the positive electrode active material is not particularly limited and may be within the range applicable to the positive electrode active material of a conventional all-solid-state rechargeable battery. Meanwhile, the amount of the positive electrode active material in the positive electrode 10 is not particularly limited, and may be within a range applicable to the positive electrode of a conventional all-solid-state rechargeable battery.

In addition, in addition to the aforementioned positive electrode active material and solid electrolyte, an additive such as a conductive auxiliary agent, a binder, a filler, a dispersant, and an ionic conductive auxiliary agent may be appropriately mixed into the positive electrode 10.

Examples of the conductive additive that can be mixed into the positive electrode 10 may include graphite, carbon black, acetylene black, Ketjen black, carbon fiber, metal powder, and the like. In addition, the binder that can be mixed into the positive electrode 10 may include, for example, styrene butadiene rubber (SBR), polytetrafluoroethylene, polyvinylidene fluoride (PVdF), polyethylene, and the like. In addition, as the filler, dispersant, conductive auxiliary agent, and the like that can be mixed into the positive electrode 10, known materials generally used in electrodes of all-solid-state rechargeable batteries may be used.

(1-2. Negative Electrode)

The negative electrode 20 includes a negative electrode current collector 21 and a negative electrode mixture layer 22 stacked on the negative electrode current collector 21. It is desirable that the negative electrode current collector 21 be composed of a material that does not react with lithium, i.e., does not form any alloy or compound with lithium. Examples of the material constituting the negative electrode collector 21 may include copper (Cu), stainless steel, titanium (Ti), iron (Fe), cobalt (Co), and nickel (Ni). It is desirable that the negative electrode current collector be made of a metal as described above.

The negative electrode mixture layer 22 includes a negative electrode active material, a carbon material, and a binder.

The negative electrode active material may be, for example, an alloy-forming element, which is an element that forms an alloy or compound with lithium through an electrochemical reaction during charging.

The alloy-forming element may be, for example, one or more selected from gold, platinum, palladium, silicon, silver, aluminum, bismuth, tin, and zinc.

If one or more of gold, platinum, palladium, silicon, silver, aluminum, bismuth, tin, and zinc are used as the alloy-forming element, the negative electrode active material has, for example, a particle shape, and the particle size is less than or equal to 4 $\mu$m, and more desirably less than or equal to 300 nm. In this case, the characteristics of the all-solid-state rechargeable battery 1 are further improved. Here, the particle size of the negative electrode active material may be measured using, for example, the median diameter (so-called $D_{50}$) using a laser particle size distribution meter.

Examples of the carbon material may include amorphous carbon such as carbon black and graphene. Examples of the carbon black may include acetylene black, furnace black, and Ketjen black.

Examples of the binder may include a styrene butadiene rubber (SBR), polytetrafluoroethylene, polyvinylidene fluoride, and polyethylene. The binder may be the same as or different from the binder in the positive electrode mixture layer 12 and the solid electrolyte layer 30.

In addition to those described above, the negative electrode mixture layer 22 may also include appropriate additives used in conventional all-solid-state rechargeable batteries, such as a filler, a dispersant, an ionic conductor, and a solid electrolyte.

(1-3. Solid Electrolyte Layer)

The solid electrolyte layer 30 is formed between the positive electrode 10 and the negative electrode 20 and includes a solid electrolyte.

The solid electrolyte may be any one that can be used in an all-solid-state rechargeable battery, such as one including a sulfide-based solid electrolyte material or an oxide-based solid electrolyte material, and is not particularly limited. In the present embodiment, as an example, a powder-like, sulfide-based solid electrolyte material is described.

As the sulfide-based solid electrolyte material, for example, $Li_2S-P_2S_5$, $Li_2S-P_2S_5-LiX$ (X is a halogen element, for example, I, Br, or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is any one of Ge, Zn, or Ga), $Li_2S-GeS_2$, $Li_2S-SiS_2-Li_3PO_4$, $Li_2S-SiS_2-Li_pMO_q$ (p and q are positive numbers, and M is one of P, Si, Ge, B, Al, Ga, or In). Here, the sulfide-based solid electrolyte material is prepared by processing a starting material (e.g., $Li_2S$, $P_2S_5$, etc.) using a melt quenching method or a mechanical milling method. Additionally, further heat treatment may be performed after these treatments. The solid electrolytes may be amorphous, crystalline, or a mixture of both.

In addition, as a solid electrolyte, it is desirable to use a material including at least one element selected from sulfur, silicon, phosphorus, and boron among the above-mentioned sulfide-based solid electrolyte materials. Accordingly, the lithium conductivity of the solid electrolyte layer 30 is improved, and the battery characteristics of the all-solid-state rechargeable battery 1 are improved. In particular, it is desirable to use a solid electrolyte containing at least sulfur (S), phosphorus (P) and lithium (Li) as constituent elements, and it is more desirable to use one including $Li_2S-P_2S_5$.

Here, when using a sulfide-based solid electrolyte material including $Li_2S-P_2S_5$ to form a solid electrolyte, a mixing molar ratio of $Li_2S$ and $P_2S_5$ may be selected in the range of, for example, $Li_2S:P_2S_5$=50:50 to 90:10.

The solid electrolyte layer 30 may further include a binder, and examples of the binder may include a styrene butadiene rubber (SBR), polytetrafluoroethylene, polyvinylidene fluoride, polyethylene, and the like. The binder in the solid electrolyte layer 30 may be the same as or different from the binder in the positive electrode mixture layer 12 and the negative electrode mixture layer 22.

(1-4. Relationship between Charge Capacity of Positive and Negative Electrodes)

It is desirable that the all-solid-state rechargeable battery 1 according to the present embodiment is configured such that the ratio of the charging capacity of the positive electrode mixture layer 12 to the charging capacity of the negative electrode mixture layer 22, i.e., a capacity ratio, satisfies the requirement of Inequation (1).

Inequation (1)

$$0.01 < b/a < 0.5$$

a: Charging capacity (mAh) of the positive electrode mixture layer 12
b: Charge capacity (mAh) of the negative electrode mixture layer 22

Meanwhile, the charge capacity of the positive electrode mixture layer 12 and the negative electrode mixture layer 22 may be measured by measurement using an all-solid-state half-cell.

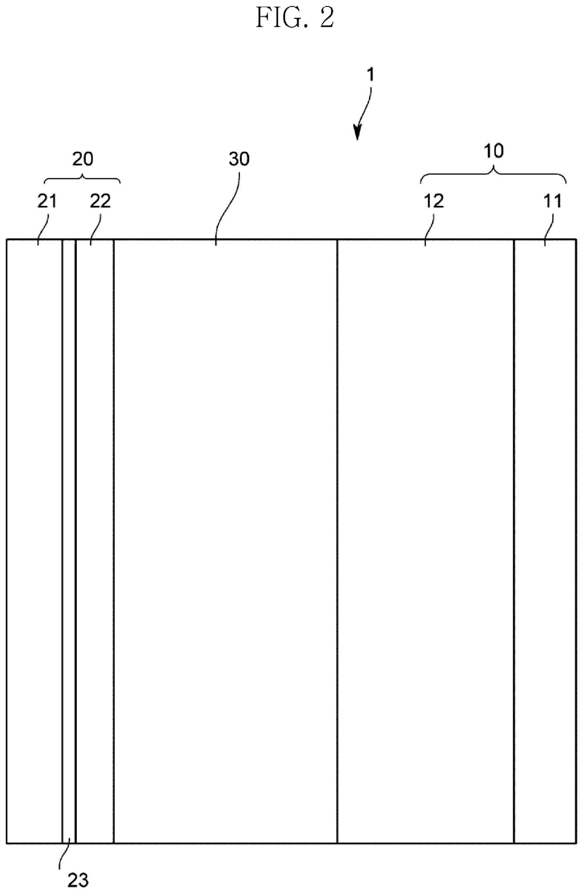

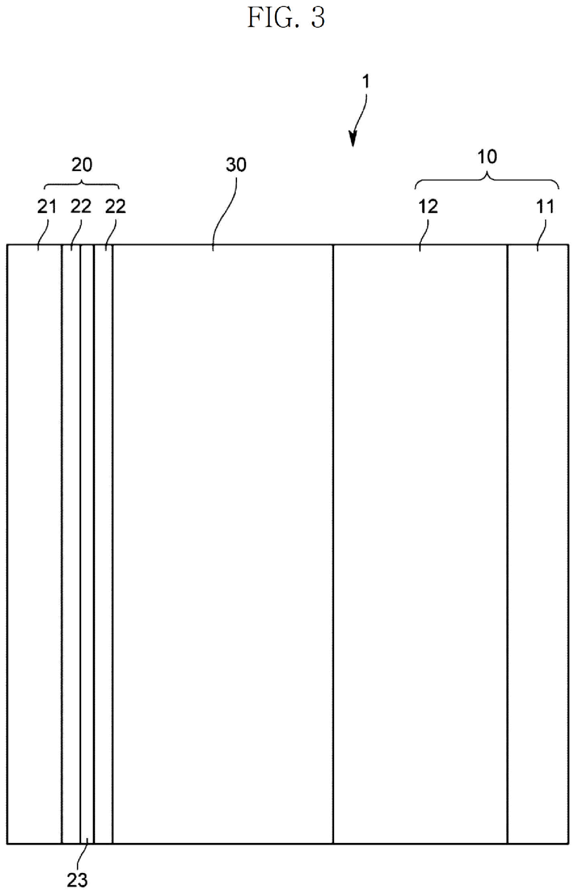

For the all-solid-state rechargeable battery 1 according to the present embodiment, as described above, it is desirable to charge the all-solid-state rechargeable battery 1 in excess of the charge capacity of the negative electrode mixture layer 22 by making the charge capacity of the positive electrode mixture layer 12 excessive with respect to the charge capacity of the negative electrode mixture layer 22. That is, it is desirable to overcharge the negative electrode mixture layer 22. In this case, at the beginning of charging, lithium is absorbed into the negative electrode mixture layer 22. That is, the negative electrode active material forms an alloy with lithium ions that have moved from the positive electrode 10. When further charging is performed beyond the capacity of the negative electrode mixture layer 22, as shown in FIG. 2 or FIG. 3, lithium is deposited on the back of the negative electrode mixture layer 22, that is, between the negative electrode current collector 21 and the negative electrode mixture layer 22 and/or inside the negative electrode mixture layer 22, and a lithium precipitation layer 23 is formed by this lithium. The lithium precipitation layer 23 is mainly composed of lithium (mainly metallic lithium), although it also contains trace amounts of elements other than lithium.

This phenomenon occurs by including a specific substance as the negative electrode active material, i.e., an alloy-forming element that forms an alloy or compound with lithium. During discharge, lithium in the negative electrode mixture layer 22 and lithium precipitation layer 23 is ionized and moves toward the positive electrode 10. Therefore, in the all-solid-state rechargeable battery 1 according to the present embodiment, precipitated lithium may be used as a negative electrode active material. In addition, because the negative electrode mixture layer 22 covers the lithium precipitation layer 23, it functions as a protective layer for the lithium precipitation layer 23 and may suppress the precipitation and growth of dendrites. Accordingly, short circuit and capacity reduction of the all-solid-state rechargeable battery 1 are suppressed, and further, the characteristics of the all-solid-state rechargeable battery 1 may be improved.

A thickness of the negative electrode mixture layer 22 is desirably within a range that satisfies the requirements of the Inequation (1), and is more desirably greater than or equal to 1 $\mu$m and less than or equal to 20 $\mu$m, or greater than or equal to 1 $\mu$m and less than or equal to 10 $\mu$m. If the thickness of the negative electrode mixture layer 22 is greater than or equal to 1 $\mu$m, the characteristics of the all-solid-state rechargeable battery 1 may be further improved. If the thickness of the negative electrode mixture layer 22 is less than or equal to 20 $\mu$m, a resistance value of the negative electrode mixture layer 22 may be suppressed to a small level, and as a result, the characteristics of the all-solid-state rechargeable battery 1 may be further improved.

The thickness of the aforementioned negative electrode mixture layer 22 may be estimated, for example, by observing the average thickness of a crosssection after assembling and press-molding an all-solid-state rechargeable battery 1 using a scanning electron microscope (SEM).

<2. Characteristic Configuration of All-solid-state Rechargeable Battery according to the Present Embodiment >

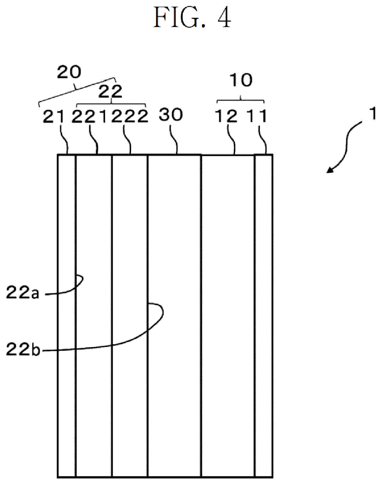

As shown in FIG. 4, the all-solid-state rechargeable battery 1 according to the present embodiment has an amount of a binder in the negative electrode mixture layer 22 that is different between the first layer 221 forming the surface 22a of the negative electrode mixture layer 22 that is in contact with the negative electrode current collector 21 and the second layer 222 forming the surface 22b of the side that is in contact with the solid electrolyte layer 30.

In the present embodiment, the negative electrode mixture layer 22 is formed from two layers, the first layer and the second layer.

The first layer 221 and the second layer 222 each include a negative electrode active material, a carbon material, and a binder.

The first layer 221 and the second layer 222 each refer to the entirety of one layer formed by coating and drying one type of slurry of a certain composition, as described below.

A weight per unit area of the negative electrode mixture layer 22 is desirably greater than or equal to 0.2 mg/cm$^2$ and less than or equal to 2.5 mg/cm$^2$, more desirably greater than or equal to 0.5 mg/cm$^2$ and less than or equal to 2.0 mg/cm$^2$, and even more desirably greater than or equal to 0.8 mg/cm$^2$ and less than or equal to 1.5 mg/cm$^2$.

A weight per unit area of the first layer 221 is desirably, for example, greater than or equal to 0.1 mg/cm$^2$ and less than or equal to 1 mg/cm$^2$, more desirably greater than or equal to 0.1 mg/cm$^2$ and less than or equal to 0.8 mg/cm$^2$, and even more desirably greater than or equal to 0.1 mg/cm$^2$ and less than or equal to 0.5 mg/cm$^2$.

A weight per unit area of the second layer 222 is desirably, for example, 0 greater than or equal to 0.1 mg/cm$^2$ and less than or equal to 1.5 mg/cm$^2$, more desirably greater than or equal to 0.3 mg/cm$^2$ and less than or equal to 1.3 mg/cm$^2$, and even more desirably greater than or equal to 0.5 mg/cm$^2$ and less than or equal to 0.9 mg/cm$^2$.

An amount A of the binder in the first layer (hereinafter also referred to as the first amount) is greater than or equal to 5 parts by weight and less than or equal to 20 parts by weight based on 100 parts by weight of a total amount of the negative electrode active material and the carbon material in the first layer. The first amount is desirably greater than or equal to 10 parts by weight and less than or equal to 18 parts by weight, and more desirably greater than or equal to 12 parts by weight and less than or equal to 16 parts by weight.

Meanwhile, an amount B (hereinafter also referred to as the second amount) of the binder in the second layer forming the surface 22b of the other layer, that is, the side in contact with the solid electrolyte layer 30 of the negative electrode mixture layer 22, is greater than or equal to 1 part by weight and less than or equal to 10 parts by weight based on 100 parts by weight of the total amount of the negative electrode active material and the carbon material in the first layer. The second amount is desirably greater than or equal to 1 part by weight and less than or equal to 8 parts by weight, and more desirably greater than or equal to 1 part by weight and less than or equal to 5 parts by weight.

In addition, the first amount is greater than the second amount, and a difference between the first amount and the second amount is greater than or equal to 4 parts by weight and less than or equal to 19 parts by weight. The difference is desirably greater than or equal to 6 parts by weight and less than or equal to 17 parts by weight, and more desirably greater than or equal to 8 parts by weight and less than or equal to 15 parts by weight.

A peel strength between the negative electrode current collector 21 and the negative electrode mixture layer 22 is desirably greater than or equal to 35 mN/mm and less than or equal to 500 mN/mm, more desirably greater than or equal to 50 mN/mm and less than or equal to 500 mN/mm, and even more desirably greater than or equal to 100 mN/mm and less than or equal to 490 mN/mm. In cases where it is difficult to measure this value, the results of a peeling test using Kapton tape, for example, as described in Examples described below, may be used as an indicator. Specifically, in the peeling test using Kapton tape, when the test is performed multiple times, it is desirable that the peeling rate of the negative electrode mixture layer 22 from the negative electrode current collector 21 is less than or equal to 25%, more desirably less than or equal to 15%, and even more desirably that no peeling occurs at all.

<3. Manufacturing Method of All-solid-state Rechargeable Battery according to the Present Embodiment >

Next, a method for manufacturing an all-solid-state rechargeable battery 1 according to the present embodiment will be described. The all-solid-state rechargeable battery 1 according to the present embodiment may be manufactured by manufacturing a positive electrode 10, a negative electrode 20, and a solid electrolyte layer 30, respectively, and then stacking each of the above layers.

(3-1. Manufacturing Process of Positive Electrode)

First, the materials (positive electrode active material, solid electrolyte, binder, etc.) that constitute the positive electrode mixture layer 12 are mixed and processed into a sheet shape.
The positive electrode composite sheet obtained in this manner is cut into an appropriate shape and laminated as a positive electrode mixture layer material on a positive electrode current collector, and the obtained stack is pressed (for example, pressed using hydrostatic pressure) to manufacture a positive electrode 10 including a positive electrode current collector and a positive electrode mixture layer.

(3-2. Manufacturing Process of Negative Electrode)

First, a slurry is prepared by adding the negative electrode mixture layer materials (negative electrode active material, carbon material, binder, and the like) constituting the negative electrode mixture layer 22 to a polar solvent or a non-polar solvent. Subsequently, the obtained slurry is coated on the negative electrode collector 21 and dried. Next, the obtained stack is pressurized (e.g., using hydrostatic pressure) to produce a negative electrode 20. The pressurization process may be omitted. Meanwhile, the negative electrode 20 may be manufactured by forming a negative electrode mixture layer 22 separately and then stacking it on the negative electrode current collector 21 and applying pressure.
In the present embodiment, two types of slurry were used in the process of coating and drying the slurry on the negative electrode collector 21. One of the two types of slurries (the first slurry) was adjusted so that an amount C of the binder was greater than or equal to 5 parts by weight and less than or equal to 20 parts by weight based on 100 parts by weight of the total weight of the negative electrode active material and carbon material in the layer obtained after coating and drying the first slurry to remove the solvent. In addition, the other side (second slurry) was adjusted so that an amount D of the binder was greater than or equal to 1 part by weight and less than or equal to 10 parts by weight based on 100 parts by weight of the total weight of the negative electrode active material and carbon material after removing the solvent from the second slurry. Meanwhile, each weight ratio of the negative electrode active material, carbon material, and binder added when adjusting the first slurry and the second slurry, respectively, are directly reflected in each weight ratio of the negative electrode active material, carbon material, and binder in the layer obtained after removing the solvent.
In addition, the amount of the binder in the first slurry was set to be greater than the amount D of the binder in the second slurry in a range of greater than or equal to 4 parts by weight and less than or equal to 19 parts by weight.
Then, the second slurry was coated and dried on the first slurry coated and dried on the negative electrode current collector 21, thereby forming a negative electrode mixture layer 22 composed of two layers with different amounts of the binder.

(3-3. Manufacturing Process of Solid Electrolyte Layer)

The solid electrolyte layer 30 may be manufactured, for example, by the following order or process.
First, the starting raw material is processed by melt quenching or mechanical milling.
For example, when using the melt quenching method, a sulfide-based solid electrolyte material may be prepared by mixing a predetermined amount of starting materials (e.g., $Li_2S$, $P_2S_5$, etc.), forming them into a pellet shape, reacting them in a vacuum at a predetermined reaction temperature, and then quenching them. Meanwhile, the reaction temperature of the mixture of $Li_2S$ and $P_2S_5$ is desirably 400 °C to 1000 °C, and more desirably 800 °C to 900 °C. Additionally, the reaction time is desirably 0.1 hour to 12 hours, more desirably 1 hours to 12 hours. In addition, the rapid cooling temperature of the reactants is usually 10 °C or lower, desirably 0 °C or lower, and the rapid cooling rate is usually about 1 °C/sec to 10,000 °C/sec, desirably about 1 °C/sec to 1,000 °C/sec.
In addition, when using a mechanical milling method, a sulfide-based solid electrolyte material may be prepared by stirring and reacting starting materials (e.g., $Li_2S$, $P_2S_5$, etc.) using a ball mill, etc. Meanwhile, the stirring speed and stirring time in the mechanical milling method are not particularly limited, but the faster the stirring speed, the faster the production speed of the sulfide-based solid electrolyte material may be, and the longer the stirring time, the higher the conversion rate of the raw material into the sulfide-based solid electrolyte material may be.

Afterwards, the mixed raw material obtained by the melt quenching method or the mechanical milling method is heat-treated at a predetermined temperature and then pulverized to produce a particle-type solid electrolyte. If a solid electrolyte has a glass transition point, it may change from amorphous to crystalline through heat treatment.

Subsequently, a solid electrolyte layer 30 may be manufactured by forming a film using a known film forming method, such as an aerosol deposition method, a cold spray method, or a sputtering method, using the solid electrolyte obtained by the above method. Meanwhile, the solid electrolyte layer 30 may be manufactured by pressurizing a solid electrolyte particle unit. In addition, the solid electrolyte layer 30 may be manufactured by mixing a solid electrolyte, a solvent, and a binder, coating, drying, and pressurizing the solid electrolyte layer 30.

(3-4. Assembly Process of All-solid-state Rechargeable Battery Cell)

An all-solid-state rechargeable battery 1 according to the present embodiment may be manufactured by stacking the positive electrode 10, the negative electrode 20, and the solid electrolyte layer 30 manufactured by the above-described method so that the solid electrolyte layer 30 is sandwiched between the positive electrode 10 and the negative electrode 20, and applying pressure (for example, applying pressure using hydrostatic pressure).

<4. Effect of the Present Embodiment>

. According to the positive electrode for the all-solid-state rechargeable battery or the all-solid-state rechargeable battery according to the present embodiment, the amount of the binder in the first layer 221 forming the surface 22a of the negative electrode current collector 21 side of the negative electrode mixture layer 22 and the second layer 222 forming the surface 22b of the solid electrolyte layer 30 side of the negative electrode mixture layer 22 is set so that each peel strength is within an appropriate range, and thus even in the case of rapid charging, peeling of the negative electrode mixture layer 22 from the negative electrode current collector 21 may be suppressed within a range that does not interfere with lithium precipitation. In addition, the adhesion between the negative electrode mixture layer 22 and the solid electrolyte layer 30 may be increased. As a result, it is possible to provide an all-solid-state rechargeable battery 1 that is difficult to cause short circuits and improves capacity retention by suppressing peeling due to internal stress accompanying short circuits and cycle progression of the battery, and is also capable of maintaining high battery capacity even when charge and discharge cycles are repeated. Because the negative electrode mixture layer 22 has a two-layer structure, the manufacture of the negative electrode 20 or the all-solid-state rechargeable battery 1 may be done relatively simply.

<5. Regarding Other Embodiments of the Present Invention>

Above, the preferred embodiments of the present invention have been described in detail with reference to the attached drawings, but the present invention is not limited to these Examples.

For example, in the above-described embodiments, the negative electrode mixture layer 22 was described as a two-layer structure in which two types of slurries having different amounts of the binder were coated twice in layers, but it may also be a three-layer structure in which three or more types of slurries having different amounts of the binder were coated three or more times in layers.

In addition, it is clear that a person having ordinary knowledge in the technical field to which the present invention belongs can arrive at various modified or altered embodiments within the scope of the technical idea described in the scope of the patent claims, and these are also naturally understood to fall within the technical scope of the present invention.

[Mode for Invention]

[Examples]

Hereinafter, the all-solid-state rechargeable battery according to the present invention will be described in more detail with reference to examples, but the present invention is not limited to these examples.

[Example 1]

[Manufacturing of Positive Electrode Layer]

$LiNi_{0.8}Co_{0.15}Al_{0.05}O_2$ (NCA) ternary powder as a positive electrode active material, $Li_2S-P_2S_5$ (80:20 mol%) amorphous powder as a sulfide-based solid electrolyte, and vapor-grown carbon fiber powder as a positive electrode layer conductive material (conductive auxiliary agent) were weighed at a weight ratio of 60:35:5 and mixed using a rotating-orbiting mixer.

Next, a dehydrated xylene solution including SBR as a binder was added to the mixed powder so that the SBR amount was 5.0 wt% based on the total weight of the mixed powder, thereby preparing a primary mixed solution.

A secondary mixture was prepared by adding an appropriate amount of dehydrated xylene to the primary mixed solution to adjust viscosity.

In addition, in order to improve the dispersibility of the mixed powder, zirconia balls with a diameter of 5 mm were added to the secondary mixed solution so that the space, mixed powder, and zirconia balls each occupied 1/3 of the total volume of the mixing vessel.

The resulting tertiary mixed solution was placed in a rotating-orbiting mixer and stirred at 3000 rpm for 3 minutes to produce a coating solution for the positive electrode active material layer.

Next, an aluminum foil current collector having a thickness of 20 $\mu$m was prepared as a positive electrode current collector, the positive electrode current collector was mounted on a tabletop screen printer, and the coating solution for the positive electrode active material layer was coated on the sheet using a metal mask having a thickness of 200 $\mu$m. After that, the sheet coated with the positive electrode active material layer was dried on a hot plate at 60 °C for 30 minutes, and then vacuum-dried at 80 °C for 12 hours. By punching this into a rectangular plate shape using a Thompson blade, a positive electrode active material layer was formed on the positive electrode current collector. A total thickness of the positive electrode current collector and positive electrode active material layer after drying was approximately 170 $\mu$m.

[Manufacturing of Negative Electrode]

A stainless-steel foil current collector with a thickness of 10 $\mu$m was prepared as a negative electrode current collector.

To form a negative electrode, 56 g of a solution in which 24 g of CB2 (Asahi Carbon, surface area of 52 $m^2$/g and oil absorption amount of 193 ml/100g) as carbon, 8 g of silver (60 nm, manufactured by Dowa), and PVdF (S5130, manufactured by Solvay) as a binder were dissolved in N-methylpyrrolidone (NMP) at a concentration of 8 wt% were weighed, 90 g of NMP was further added, and Slurry 1 having a weight ratio of carbon/silver/binder = 75/25/14 was obtained using a rotating-orbiting stirrer (manufactured by THINKY). Also, the viscosity of slurry 1 was 10,000 mP.s, which was within the range where there was no problem with coating.

Next, 24 g of the carbon, 8 g of the silver, and 14 g of the binder solution were weighed, and 112 g of NMP was also added, and stirred in the same manner to obtain Slurry 2 having a weight ratio of carbon/silver/binder = 75/25/3.5. The viscosity of Slurry 2 was 9,000 mP.s, which was within the range where there was no problem in coating.

Slurry 1 was coated on the current collector using an applicator, dried at 80 °C for 10 minutes, and some coated products were used for a peeling test from the current collector foil, and the remaining coated products were similarly coated with Slurry 2 and dried to obtain desired electrode plates. A weight per unit area of the sum of the carbon, silver, and binder (i.e., the solid content of the negative electrode mixture layer) was 0.5 mg/$cm^2$ for both the first and second layers, and 1.0 mg/$cm^2$ for the total negative electrode mixture layer. The electrode plate was vacuum dried at 103 °C for 12 hours, stamped into a specified size using a pinnacle die, and a battery cell was assembled.

[Manufacturing of Solid Electrolyte Layer Coating Solution]

As a sulfide-based solid electrolyte, amorphous powder of $Li_2S-P_2S_5$ (80:20 mol%) was added with SBR binder dissolved in dehydrated xylene to form a primary mixed slurry so as to be 1 wt% based on the solid electrolyte. In addition, a secondary mixed slurry was prepared by adding an appropriate amount of dehydrated xylene and dehydrated diethylbenzene to the primary mixed slurry for viscosity adjustment. In addition, in order to improve the dispersibility of the mixed powder, zirconia balls with a diameter of 5 mm were introduced into the second mixed slurry so that the space, mixed powder, and zirconia balls each occupied 1/3 of the total volume of the mixing vessel. Accordingly, the third mixed solution produced was put into a rotating mixer and stirred at 3000 rpm for 3 minutes to produce a solid electrolyte layer coating solution.

[Manufacturing of Solid Electrolyte Sheet]

The produced solid electrolyte layer coating solution was coated with a blade onto a PET film with a release-treated surface, dried on a hot plate at 40 °C for 10 minutes, and then vacuum-dried at 40 °C for 12 hours to obtain a solid electrolyte sheet. A thickness of the solid electrolyte layer after drying was approximately 42 $\mu$m. The dry solid electrolyte sheet was punched out by a Thomson blade and processed into a predetermined size.

[Manufacturing of Electrolyte Negative Electrode Structure]

A solid electrolyte sheet was placed on the surface of the negative electrode so that the solid electrolyte layer and the negative electrode were in contact, and these were mounted on a 3 mm-thick aluminum plate (supporting material) to which a release film was bonded, and a vacuum laminate packing was performed including the supporting material. By immersing in a pressurized medium and performing a hydrostatic pressure treatment (a pressing/compaction process using an isotropic press) at 50 MPa, the solid electrolyte layer (also called the SE layer) on the solid electrolyte sheet was integrated with the negative electrode. This will be referred to as an electrolyte negative electrode structure.

[Manufacturing of All-solid-state Rechargeable Battery Cell]

An electrolyte negative electrode structure was placed at the center of an aluminum laminate, and a positive electrode layer was placed thereon so that it overlapped with the center of the electrolyte negative electrode structure. This was vacuum-degassed, sealed, and mounted on a 3 mm-thick aluminum plate (supporting material) to which a release film was bonded, followed by double vacuum lamination sealing. This was immersed in a pressurized medium and subjected to hydrostatic pressure treatment (compressing/compacting process using an isotropic press) at 490 MPa to obtain a single cell of an all-solid-state rechargeable battery cell.

[Peeling Test of Negative Electrode]

The electrode plate manufactured from the negative electrode was cut to 5 cm x 20 cm, mounted on a 3 mm-thick aluminum plate (supporting material) to which a release film was bonded, and vacuum laminated twice to seal it. This was immersed in a pressurized medium and subjected to hydrostatic pressure treatment (compressing/compaction process using an isostatic press) at 490 MPa. After processing, Kapton tape (1 cm x 5 cm, product number: 650S#25) was evenly compressed on the electrode plate using a metal roller weighing 2 kg at 8 points to bond it, and then it was pulled up vertically by hand to check the condition of the mixture layer being peeled off from the current collector. Additionally, a 180-degree peeling test was performed using a Shimadzu Autograph tensile tester to quantify the peel strength. The solid electrolyte layer was mounted on the electrode plate, the hydrostatic pressure treatment was performed, and a peeling test of the solid electrolyte layer using a Kapton tape was performed in the same manner. The results are shown in Table 1. Meanwhile, the evaluation criteria are as follows. The unit of the amount of the binder in Examples 1 to 7 and Comparative Examples 1, 2, 7, and 8 of Table 1 is parts by weight based on 100 parts by weight of the total amount of the negative electrode active material and carbon material in the first layer or the second layer. Because Comparative Examples 3 to 6 have a negative electrode mixture layer consisting of only one layer, the unit of the amount of the binder in Comparative Examples 3 to 6 in Table 1, which is part by weight, is based on 100 parts by weight of the total amount of the negative electrode active material and carbon material in the negative electrode mixture layer.

1: No peeling
2: Only the solid electrolyte layer is peeled off from the negative electrode.
3: The entire solid electrolyte layer and a portion of the negative electrode are peeled off.
4: The entire solid electrolyte layer and the entire negative electrode are peeled off.

[Cycle Evaluation of All-Solid-State Rechargeable Battery Cells]

The manufactured all-solid-state rechargeable battery cell was connected to a charge/discharge device (Toyo Systems, TOSCAT) and a cycle test was performed at 45 °C.
Charge and discharge were performed at 0.33C (CCCV_0.1C cut-off)/0.33C (4.25V/2.5V), and the ratio of the discharge capacity at 200 cycles when the first discharge capacity was 100 was defined as the capacity retention rate, and comparison was performed. The results are shown in Table 1.

[Example 2]

Below, an all-solid-state rechargeable battery cell was manufactured under the same conditions as Example 1, except for the negative electrode manufacturing process.

[Manufacturing of Negative Electrode]

A stainless-steel foil current collector with a thickness of 10 $\mu$m was prepared as a negative electrode current collector.

To form a negative electrode, 80 g of a solution in which 24 g of CB2 (Asahi Carbon, surface area of 52 m$^2$/g and oil absorption amount of 193 ml/100 g) as carbon, 8 g of silver (60 nm, manufactured by Dowa), and PVdF (S5130, manufactured by Solvay) as a binder were dissolved in N-methylpyrrolidone (NMP) at a concentration of 8 wt% were weighed, 64 g of NMP was further added, and Slurry 3 having a weight ratio of carbon/silver/binder = 75/25/20 was obtained using a rotating-orbiting stirrer (manufactured by THINKY). The viscosity of Slurry 3 was 12,000 mP.s, which was within the range where there was no problem in coating.

Next, 24 g of the carbon, 8 g of the silver, and 4 g of the binder solution were weighed, and 122 g of NMP was added and stirred to obtain Slurry 4 having a weight ratio of carbon/silver/binder = 75/25/1. The viscosity of Slurry 4 was 9,000 mP.s, which was within the range where there was no problem in coating.

Slurry 3 was coated on the current collector using an applicator, dried at 80 °C for 10 minutes, and then Slurry 4 was coated thereon and dried to obtain the desired electrode plate. At this time, a weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Example 3]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector.

To form a negative electrode, 24 g of CB2 (Asahi Carbon, surface area of 52 m$^2$/g and oil absorption amount of 193 ml/100 g) as carbon, 8 g of silver (60 nm, manufactured by Dowa), and 40 g of a solution in which PVdF (S5130, manufactured by Solvay) as a binder was dissolved in N-methylpyrrolidone (NMP) at a concentration of 8 wt% were weighed, 92 g of NMP was further added, and Slurry 5 having a weight ratio of carbon/silver/binder = 75/25/10 was obtained using a rotating-orbiting stirrer (manufactured by THINKY). The viscosity of Slurry 5 was 10,000 mP.s, which was within the range where there was no problem in coating.

Slurry 5 was coated on the current collector using an applicator, dried at 80 °C for 10 minutes, and then Slurry 4 used in Example 2 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer.

The electrode plate was vacuum dried at 103 °C for 12 hours, stamped into a specified size using a pinnacle die, and a battery cell was assembled. The above electrode plate was vacuum dried at 103 °C for 12 hours, stamped into a specified size using a pinnacle die, and a battery was assembled.

For the manufactured all-solid-state rechargeable battery cells, a peeling test and cycle evaluation were performed in the same manner as in Example 1. The results are shown in Table 1.

[Example 4]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector. To form a negative electrode, 24 g of CB2 (Asahi Carbon, surface area of 52 m$^2$/g and oil absorption amount of 193 ml/100 g) as carbon, 8 g of silver (60 nm, manufactured by Dowa), and 20 g of a solution in which PVdF (S5130, manufactured by Solvay) as a binder was dissolved in N-methylpyrrolidone (NMP) at a concentration of 8 wt% were weighed, and 112 g of NMP was further added, and Slurry 6 having a weight ratio of carbon/silver/binder = 75/25/5 was obtained using a rotating-orbiting stirrer (manufactured by THINKY). The viscosity of Slurry 6 was 10,000 mP.s, which was within the range where there was no problem in coating.

Slurry 6 was coated on the current collector using an applicator, dried at 80 °C for 10 minutes, and then Slurry 4 used in Example 2 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer.

The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Example 5]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a cathode, Slurry 3 used in Example 2 was coated the current collector using an applicator, dried at 80 °C for 10 minutes, and then Slurry 5 used in Example 3 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Example 6]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, Slurry 1 used in Example 1 was coated on the current collector using an applicator, dried at 80 °C for 10 minutes, and then Slurry 5 used in Example 3 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Example 7]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, Slurry 1 used in Example 1 was coated on the current collector using an applicator, dried at 80 °C for 10 minutes, and then Slurry 4 used in Example 2 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Example 8]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector. The negative electrode was manufactured in the same method as Example 1, except that a weight per unit area of the sum of the carbon, silver, and binder in the first layer was 0.1 mg/cm$^2$ and that in the second layer was 0.9 mg/cm$^2$.
For the manufactured all-solid-state rechargeable battery cells, a peeling test and cycle evaluation were performed in the same manner as in Example 1. The results are shown in Table 1.

[Example 9]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector. The negative electrode was manufactured in the same method as Example 1, except that a weight per unit area of the sum of the carbon, silver, and binder in the first layer was 0.4 mg/cm$^2$ and that in the second layer was 0.6 mg/cm$^2$.
For the manufactured all-solid-state rechargeable battery cells, a peeling test and cycle evaluation were performed in the same manner as in Example 1. The results are shown in Table 1.

[Example 10]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector. The negative electrode was manufactured in the same method as Example 1, except that a weight per unit area of the sum of the carbon, silver, and binder in the first layer was 0.9 mg/cm$^2$ and that in the second layer was 0.1 mg/cm$^2$.
For the manufactured all-solid-state rechargeable battery cells, a peeling test and cycle evaluation were performed in the same manner as in Example 1. The results are shown in Table 1.

[Comparative Example 1]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 $\mu$m was prepared as a negative electrode current collector. To form a negative electrode, Slurry 2 used in Example 1 was coated on the current collector using an applicator, dried at 80 °C for 10 minutes, and then Slurry 1 used in Example 1 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.
For the manufactured all-solid-state rechargeable battery cells, a peeling test and cycle evaluation were performed in the same manner as in Example 1. The results are shown in Table 1.

[Comparative Example 2]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, 2 g of CB2 (Asahi Carbon, surface area of 52 $m^2$/g and oil absorption amount of 193 ml/100 g) as carbon, 8 g of silver (60 nm, manufactured by Dowa), and 40 g of a solution in which PVdF (S5130, manufactured by Solvay) as a binder was dissolved in N-methylpyrrolidone (NMP) at a concentration of 8 wt% were weighed, and 122 g of NMP was further added, and Slurry 7 having a weight ratio of carbon/silver/binder = 75/25/0.5 was obtained using a rotating-orbiting stirrer (manufactured by THINKY). Slurry 7 had poor dispersibility and was in a coagulated state.

Slurry 6 used in Example 4 was coated on the current collector using an applicator, dried at 80 °C for 10 minutes, and then Slurry 7 was coated thereon, but coagulation was severe, and the desired electrode plate could not be obtained.

[Comparative Example 3]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, Slurry 1 used in Example 1 was coated on the current collector using an applicator and dried to obtain the desired electrode plate. A weight per unit area of the sum of the carbon, silver, and binder was 0.5 mg/$cm^2$ for both the first and second layers, and 1.0 mg/$cm^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Comparative Example 4]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, 100 g of a solution in which 24 g of CB2 (Asahi Carbon, surface area of 52 $m^2$/g and oil absorption amount of 193 ml/100 g) as carbon, 8 g of silver (60 nm, manufactured by Dowa), and PVdF (S5130, manufactured by Solvay) as a binder were dissolved in N-methylpyrrolidone (NMP) at a concentration of 8 wt% were weighed, 20 g of NMP was further added, and Slurry 8 having a weight ratio of carbon/silver/binder = 75/25/25 was obtained using a rotating-orbiting stirrer (manufactured by THINKY). The viscosity of Slurry 8 was 15,000 mP.s, which was within the range where there was no problem in coating.

Slurry 8 was coated on the current collector using an applicator, dried at 80 °C for 10 minutes, and then Slurry 4 was coated thereon and dried to obtain the desired electrode plate. Slurry 8 was coated on the current collector using an applicator, dried at 80 °C for 10 minutes, and the desired electrode plate was obtained. A weight per unit area of the sum of the carbon, silver, and binder was 0.5 mg/$cm^2$ for both the first and second layers, and 1.0 mg/$cm^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Comparative Example 5]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. To form a negative electrode, 28 g of a solution in which 24 g of CB2 (Asahi Carbon, surface area of 52 m$^2$/g and oil absorption amount of 193 ml/100 g) as carbon, 8 g of silver (60 nm, manufactured by Dowa), and PVdF (S5130, manufactured by Solvay) as a binder were dissolved in N-methylpyrrolidone (NMP) at a concentration of 8 wt% were weighed, 102 g of NMP was further added, and Slurry 9 having a weight ratio of carbon/silver/binder = 75/25/7 was obtained using a rotating-orbiting stirrer (manufactured by THINKY). The viscosity of Slurry 9 was 11,000 mP.s, which was within the range where there was no problem in coating.

Next, Slurry 9 was coated on the current collector using an applicator and dried at 80 °C for 10 minutes. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Comparative Example 6]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. Slurry 2 used in Example 1 was coated on the current collector using an applicator and dried at 80 °C for 10 minutes to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Comparative Example 7]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. Slurry 9 used in Example 1 was coated on the current collector using an applicator, dried at 80 °C for 10 minutes, and then Slurry 6 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

[Comparative Example 8]

An all-solid-state rechargeable battery cell was manufactured under the same conditions as Example 1, except for the negative electrode manufacturing process below.

[Manufacturing of Negative Electrode]

A stainless-steel foil current collector with a thickness of 10 μm was prepared as a negative electrode current collector. Using an applicator on the current collector, Slurry 3 was coated, dried at 80 °C for 10 minutes, and then Slurry 7 was coated thereon and dried to obtain the desired electrode plate. A weight per unit area of the sum of the carbon, silver, and binder was 0.5 mg/cm$^2$ for both the first and second layers, and 1.0 mg/cm$^2$ for the total negative electrode mixture layer. The electrode plate was vacuum dried at 103 °C for 12 hours, stamped into a specified size using a pinnacle die, and a battery cell was assembled.

For the manufactured all-solid-state rechargeable battery cells, a peeling test and cycle evaluation were performed in the same manner as in Example 1. The results are shown in Table 1.

(Table 1)

| | Amount of the binder in negative electrode mixture layer (parts by weight) | Weight per unit area of mixture layer (mg/cm$^2$) | Negative electrode current collector-negative electrode mixture layer | | Solid electrolyte layer-negative electrode mixture layer | | The number of cycle short circuit | Capacity retention rate |
|---|---|---|---|---|---|---|---|---|
| | First layer/second layer | First layer/second layer | Whether it is peeled off or not | Peel strength /(mN/mm) | Whether it is peeled off or not | Peeled state | pcs/10 pcs | %@ 0.3 3Cc yc_ 200 th |
| Ex. 1 | 14%/3.5% | 0.5/0.5 | No (0/8) | 318 | No (0/8) | 1 | 0/10 | 92 |
| Ex. 2 | 20%/1% | 0.5/0.5 | No (0/8) | 490 | No (0/8) | 1 | 0/10 | 88 |
| Ex. 3 | 10%/1% | 0.5/0.5 | No (0/8) | 290 | No (0/8) | 1 | 0/10 | 87 |
| Ex. 4 | 5%/1% | 0.5/0.5 | No (0/8) | 160 | No (0/8) | 1 | 0/10 | 86 |
| Ex. 5 | 20%/10% | 0.5/0.5 | No (0/8) | 490 | No (0/8) | 1 | 0/10 | 83 |
| Ex. 6 | 14%/10% | 0.5/0.5 | No (0/8) | 318 | No (0/8) | 1 | 0/10 | 82 |
| Ex. 7 | 14%/1% | 0.5/0.5 | No (0/8) | 318 | No (0/8) | 1 | 0/10 | 87 |
| Ex. 8 | 14%/3.5% | 0.1/0.9 | No (0/8) | 318 | No (0/8) | 1 | 0/10 | 95 |
| Ex. 9 | 14%/3.5% | 0.4/0.6 | No (0/8) | 318 | No (0/8) | 1 | 0/10 | 93 |
| Ex. 10 | 14%/3.5% | 0.9/0.1 | No (0/8) | 318 | No (0/8) | 1 | 1/10 | 88 |
| Comp. Ex. 1 | 3.5%/14% | 0.5/0.5 | Yes (5/8) | 30 | Yes (6/8) | 3 | 7/10 | 73 |
| Comp. Ex. 2 | 5%/0.5% | 0.5/0.5 | No (0/8) | 160 | - | - | - | - |
| Comp. Ex. 3 | 14%/14% | 0.5/0.5 | No (0/8) | 318 | Yes (6/8) | 2 | 5/10 | 81 |
| Comp. Ex. 4 | 25%/25% | 0.5/0.5 | No (0/8) | 580 | Yes (8/8) | 2 | 10/10 | 50 |
| Comp. Ex. 5 | 7%/7% | 0.5/0.5 | Yes (3/8) | 55 | Yes (2/8) | 2 | 2/10 | 78 |
| Comp. Ex. 6 | 3.5%/3.5% | 0.5/0.5 | Yes (5/8) | 30 | No (0/8) | 1 | 1/10 | 65 |
| Comp. Ex. 7 | 7%/5% | 0.5/0.5 | Yes (3/8) | 55 | Yes (2/8) | 2 | 1/10 | 80 |
| Comp. Ex. 8 | 20%/0.5% | 0.5/0.5 | No (0/8) | 490 | Yes (3/8) | 3 | 3/10 | 78 |

[Consideration]

In Examples 1 to 10, the results showed that there was no peeling of the negative electrode mixture layer from the negative electrode current collector foil, and also no peeling of the solid electrolyte layer from the negative electrode mixture layer. In addition, the number of short circuits is sufficiently low, either 0 or 1, and the cycle-life of the battery is sufficiently high, exceeding 80%.

From the comparison of the results of Example 10, in which the weight per unit area of the first layer was increased to 0.9 mg/cm² and the weight per unit area of the second layer was reduced to 0.1 mg/cm², with Examples 1, 8, and 9, it was found that a smaller weight per unit area of the first layer facilitates lithium diffusion and precipitation onto the current collector foil, resulting in better capacity retention rate and battery characteristics.

In comparison, in Comparative Example 1, which reversed the amount of the binder of Example 1, the amount of the binder in the first layer was 3.5 parts by weight, and thus the peel strength between the negative electrode current collector and the negative electrode mixture layer was reduced, resulting in a high probability of peeling occurring between them. In addition, because the amount of the binder in the second layer was 14 parts by weight, the binder covered the carbon material in the negative electrode mixture layer, resulting in insufficient adhesion between the solid electrolyte layers. It is believed that the adhesion of the interface between the negative electrode mixture layer and the solid electrolyte layer is mainly due to physical adhesion that occurs when the relatively soft solid electrolyte layer digs into the fine irregularities formed on the surface of the negative electrode mixture layer, which is formed by solidifying the particulate material with a binder, by applying pressure. Accordingly, the irregularities are filled by the binder, reducing the contact area and reducing the adhesion. As a result, the number of battery short circuit occurrences increased to 7/10, and the capacity retention rate also decreased to 65%.

In Comparative Example 3, because the amount of the binder was uniformly 14 parts by weight throughout the entire negative electrode mixture layer, sufficient peel strength was secured between the negative electrode current collector and the negative electrode mixture layer. However, because the amount of the binder coating the carbon of the negative electrode layer was large, the adhesion to the solid electrolyte layer was poor, and after hydrostatic pressure treatment, only the solid electrolyte was peeled off at a high rate of 6/8. As a result, a 50% battery short circuit occurred, and the capacity retention rate was also low at 81%.

In Comparative Example 4, the amount of the binder was uniformly 25 parts by weight throughout the entire negative electrode mixture layer, and the peel strength between the negative electrode current collector and the negative electrode mixture layer was excessive. In addition, because the amount of binder coating the carbon of the negative electrode mixture layer was large, the adhesion to the solid electrolyte layer was poor, and after hydrostatic pressure treatment, only 8/8 of the solid electrolyte was peeled off. As a result, the precipitation of lithium in the negative electrode was hindered, cracks occurred in the negative electrode mixture layer, and the battery was short-circuited prematurely.

In Comparative Example 5, the amount of the binder was 7.0 parts by weight uniformly distributed throughout the entire negative electrode mixture layer, and it was difficult to completely prevent peeling between the negative electrode current collector and the negative electrode mixture layer.

In Comparative Example 6, the amount of the binder was 3.5 parts by weight uniformly throughout the entire negative electrode mixture layer, and in Comparative Example 6, the peel strength between the solid electrolyte layer and the negative electrode mixture layer was sufficient, but peeling occurred between the negative electrode current collector and the negative electrode mixture layer, resulting in a short circuit, similar to Comparative Example 5.

In Comparative Example 7, the amount of the binder in the first layer is 7 parts by weight, and the adhesion between the negative electrode current collector and the negative electrode mixture layer is sufficiently high. In addition, the amount of the binder in the second layer is smaller than in Comparative Example 5, and thus the balance is better than in Comparative Example 5. However, because the difference in the amount of the binder between the first layer and the second layer is small at 2.0, a short circuit occurs, albeit at a low frequency, and the capacity retention rate is also 80%.

In addition, in Comparative Example 8, where the difference between the amount of the binder of the first layer and the amount of the binder of the second layer was 19.5, the occurrence rate of peeling or short circuit increased. It is believed that one of the factors is that the amount of the binder in the second layer was too low, which resulted in the deterioration of the dispersibility of the slurry, which in turn led to a deterioration in the balance of the entire negative electrode mixture layer, resulting in a decrease in the bonding strength.

From the above results, as shown in Examples 1 to 10, it was found that amount A (first content) of the binder in the first layer is greater than or equal to 5 parts by weight and less than or equal to 20 parts by weight based on 100 parts by weight of the total amount of the negative electrode active material and the carbon material in the first layer, amount B (second content) of the binder in the second layer is greater than or equal to 1 part by weight and less than or equal to 10 parts by weight based on 100 parts by weight of the total amount of the negative electrode active material and the carbon material in the second layer, and the first amount is greater than the second amount, and the difference between the first amount and the second amount is in the range of greater than or equal to 4 parts by weight and less than or equal to 19 parts by weight, thereby making it difficult for a short circuit to occur during rapid charging and also suppressing cycle degradation.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**<Description of symbols>**

1: all-solid-state rechargeable battery
10: positive electrode
11: positive electrode current collector
12: positive electrode mixture layer
20: negative electrode
21: negative electrode current collector
22: negative electrode mixture layer
221: first layer
222: second layer
23: lithium precipitation layer
30: solid electrolyte layer

**Claims**

1. A negative electrode for an all-solid-state rechargeable battery, comprising

a negative electrode current collector and a negative electrode mixture layer,
wherein the negative electrode mixture layer comprises a first layer forming a surface on the negative electrode collector side of the negative electrode mixture layer and a second layer forming a surface on the opposite side to the first layer of the negative electrode mixture layer,
the first layer and the second layer each comprise a negative electrode active material, a carbon material, and a binder,
an amount A of the binder in the first layer is greater than or equal to 5 parts by weight and less than or equal to 20 parts by weight based on 100 parts by weight of a total weight of the negative electrode active material and the carbon material in the first layer,
an amount B of the binder in the second layer is greater than or equal to 1 part by weight and less than or equal to 10 parts by weight based on 100 parts by weight of the total weight of the negative electrode active material and the carbon material in the second layer,
the amount A is greater than the amount B, and
a difference between the amount A and the amount B is in a range of greater than or equal to 4 parts by weight and less than or equal to 19 parts by weight.

2. The negative electrode for the all-solid-state rechargeable battery as claimed in claim 1, wherein the negative electrode mixture layer is composed of two layers of the first layer and the back layer.

3. The negative electrode for the all-solid-state rechargeable battery as claimed in claim 1, wherein the negative electrode current collector comprises a metal and the binder comprises a polyvinylidene fluoride polymer.

4. The negative electrode for the all-solid-state rechargeable battery as claimed in claim 1, wherein a peel strength between the negative electrode current collector and the negative electrode mixture layer is greater than or equal to 35 mN/mm and less than or equal to 490 mN/mm.

5. An all-solid-state rechargeable battery, comprising

a positive electrode, a negative electrode, and a solid electrolyte layer between the positive electrode and the negative electrode,
wherein the negative electrode is the negative electrode for the all-solid-state rechargeable battery as claimed in any one of claim 1 to claim 4.

6. A method for manufacturing a negative electrode for an all-solid-state rechargeable battery, comprising

coating the first negative electrode slurry on the negative electrode current collector and drying it to form the first layer,

coating a second negative electrode slurry on the formed first layer and drying it to form the second layer,

wherein the negative electrode comprises a negative electrode current collector and a negative electrode mixture layer, and

the negative electrode mixture layer comprises a first layer forming a surface on the negative electrode collector side of the negative electrode mixture layer and a second layer forming a surface on the opposite side to the first layer of the negative electrode mixture layer,

the first negative electrode slurry and the second negative electrode slurry include a negative electrode active material, a carbon material, a binder, and a solvent,

an amount C of the binder in the first negative electrode slurry is greater than or equal to 5 parts by weight and less than or equal to 20 parts by weight based on 100 parts by weight of the total weight of the negative electrode active material and the carbon material in the first negative electrode slurry,

an amount D of the binder in the second negative electrode slurry is greater than or equal to 1 part by weight and less than or equal to 10 parts by weight based on 100 parts by weight of the total weight of the negative electrode active material and the carbon material in the second negative electrode slurry,

the amount C is greater than the amount D, and

a difference between the amount C and the amount D is in a range of greater than or equal to 4 parts by weight and less than or equal to 19 parts by weight.

FIG. 1

# FIG. 2

FIG. 3

FIG. 4

## INTERNATIONAL SEARCH REPORT

| International application No. |
| --- |
| **PCT/KR2024/010880** |

| A. | CLASSIFICATION OF SUBJECT MATTER |
| --- | --- |

**H01M 4/13**(2010.01)i; **H01M 4/66**(2006.01)i; **H01M 4/62**(2006.01)i; **H01M 10/0585**(2010.01)i; **H01M 10/052**(2010.01)i; **H01M 4/139**(2010.01)i; **H01M 10/056**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/13(2010.01); H01M 10/052(2010.01); H01M 10/0525(2010.01); H01M 10/0562(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 합제층(combined layer), 음극(anode), 결착제(binder), 활물질(active material), 탄소 (carbon), 전고체(all-solid-state), 이차전지(secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114914393 A (ZHUHAI COSMX BATTERY CO., LTD.) 16 August 2022 (2022-08-16)<br>See claims 1, 2, 5, 8 and 10, and paragraphs [0040] and [0069]-[0084]. | 1-6 |
| A | KR 10-2022-0009474 A (SK ON CO., LTD.) 24 January 2022 (2022-01-24)<br>See claims 1, 4 and 7. | 1-6 |
| A | KR 10-2023-0058153 A (DAIKIN INDUSTRIES, LTD.) 02 May 2023 (2023-05-02)<br>See claims 1 and 4. | 1-6 |
| A | KR 10-2022-0008907 A (KUREHA CORPORATION) 21 January 2022 (2022-01-21)<br>See claims 1 and 6. | 1-6 |
| A | KR 10-2023-0017051 A (SAMSUNG SDI CO., LTD.) 03 February 2023 (2023-02-03)<br>See claims 1 and 10. | 1-6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 November 2024** | **05 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/010880** |

| Patent document cited in search report | | | Publication date (day/month/year) | Patent family member(s) | | | Publication date (day/month/year) |
|---|---|---|---|---|---|---|---|
| CN | 114914393 | A | 16 August 2022 | None | | | |
| KR | 10-2022-0009474 | A | 24 January 2022 | CN | 112585781 | A | 30 March 2021 |
| | | | | CN | 112585781 | B | 29 March 2024 |
| | | | | EP | 3846250 | A1 | 07 July 2021 |
| | | | | JP | 2021-535537 | A | 16 December 2021 |
| | | | | JP | 2023-134606 | A | 27 September 2023 |
| | | | | JP | 7313362 | B2 | 24 July 2023 |
| | | | | KR | 10-2020-0026055 | A | 10 March 2020 |
| | | | | KR | 10-2021-0014716 | A | 09 February 2021 |
| | | | | KR | 10-2262044 | B1 | 09 June 2021 |
| | | | | KR | 10-2350190 | B1 | 14 January 2022 |
| | | | | US | 11843117 | B2 | 12 December 2023 |
| | | | | US | 11848450 | B2 | 19 December 2023 |
| | | | | US | 11848451 | B2 | 19 December 2023 |
| | | | | US | 2021-0167391 | A1 | 03 June 2021 |
| | | | | US | 2022-0131151 | A1 | 28 April 2022 |
| | | | | US | 2022-0131152 | A1 | 28 April 2022 |
| | | | | WO | 2020-046026 | A1 | 05 March 2020 |
| KR | 10-2023-0058153 | A | 02 May 2023 | CN | 116057742 | A | 02 May 2023 |
| | | | | EP | 4210140 | A1 | 12 July 2023 |
| | | | | JP | 2024-128021 | A | 20 September 2024 |
| | | | | TW | 202224237 | A | 16 June 2022 |
| | | | | US | 2023-0231182 | A1 | 20 July 2023 |
| | | | | WO | 2022-050252 | A1 | 10 March 2022 |
| KR | 10-2022-0008907 | A | 21 January 2022 | CN | 113767484 | A | 07 December 2021 |
| | | | | EP | 3979360 | A1 | 06 April 2022 |
| | | | | JP | 2020-194706 | A | 03 December 2020 |
| | | | | JP | 7364359 | B2 | 18 October 2023 |
| | | | | WO | 2020-241691 | A1 | 03 December 2020 |
| KR | 10-2023-0017051 | A | 03 February 2023 | CN | 115692597 | A | 03 February 2023 |
| | | | | EP | 4135068 | A2 | 15 February 2023 |
| | | | | EP | 4135068 | A3 | 26 April 2023 |
| | | | | US | 2023-0089248 | A1 | 23 March 2023 |

Form PCT/ISA/210 (patent family annex) (July 2022)

**REFERENCES CITED IN THE DESCRIPTION**

**Patent documents cited in the description**

- KR 2071585
- KR 2053063

- KR 1527748